# EUROPÄISCHE PATENTSCHRIFT

(11) **EP 0 545 071 B1**
(45) Veröffentlichungstag und Bekanntmachung des Hinweises auf die Patenterteilung: **27.12.1995**
(21) Anmeldenummer: 92118474.3
(22) Anmeldetag: 29.10.1992
(51) Int. Cl.: G07C 5/00, B62D 65/00

(54) **Einrichtung zur Identifikation von Fahrzeug- und Ausstattungsmerkmalen**
Installation for the identification of features of vehicles and their equipment
Installation pour l'identification des caractéristiques des véhicules et leur équipement

(30) Priorität: 05.12.1991 DE 4140123
(43) Veröffentlichungstag der Anmeldung: 09.06.1993
(73) Patentinhaber: MERCEDES-BENZ AG, 70327 Stuttgart (DE)
(72) Erfinder: Kaminski, Detlef, Dipl.-Ing., W-7014 Kornwestheim (DE); Kühner, Thilo, Dipl.-Ing., W-7148 Remseck (DE); Nieuwenhuizen, Regnerus, Dipl.-Ing., W-7050 Waiblingen (DE)

(56) Entgegenhaltungen:
- DE-A- 2 359 448
- DE-A- 3 605 697
- DE-A- 3 831 560
- FR-A- 2 647 930

## Beschreibung

Die Erfindung betrifft eine Einrichtung zur Identifikation von Fahrzeug- und Ausstattungsmerkmalen nach der Gattung des Hauptanspruchs.

Die werkseitige Konfiguration von Fahrzeugen und deren Sonderausstattungen insbesondere hinsichtlich elektronischen Systemen wird bislang mittels Fahrzeugdatenkarten geleistet. Diese Fahrzeugdatenkarten werden bei Auslieferung jedem Fahrzeug beigelegt und müssen hernach vom Fahrzeughalter verwahrt und verwaltet werden. Ein Duplikat verbleibt beim Fahrzeughersteller.

Ein elektronischer Ansatz zur Automatisierung der vorerwähnten Datenkarten in einem elektronischen Medium kann in dem sogenannten elektronischen Schlüssel von verschiedenen Automobilherstellern gesehen werden; in der Fachzeitschrift "Impulse" Nr. 9/1990, herausgegeben von der Volkswagen AG, ist ein entsprechender Schlüssel mit Datenspeicher offenbart.

Sowohl die Fahrzeugdatenkarte als auch der elektronische Schlüssel haben den Nachteil, daß die Pflege des Datenträgers im wesentlichen vom Kunden übernommen werden muß, und diese Daten nicht in jedem Falle bei einer Kundendienstmaßnahme am Fahrzeug verfügbar sind, weil beide grundsätzlich nicht fahrzeugfest sind.

Die gattungsbildende DE-OS 39 26 097 beschreibt eine Vorrichtung zum Abfragen von Steuergeräte-Daten, wie Diagnosedaten oder Zustandsdaten, bei der Informationen über die Art und Zahl der im Fahrzeug vorhandenen Steuergeräte an einer zentralen stelle fahrzeugfest abgespeichert sind. Es ist dabei vorgesehen, daß ein Diagnosegerät zunächst diese zentrale Stelle abfrägt und auf der Grundlage dabei erhaltener Daten dann auf die einzelnen Steuergeräte in automatischer Reihenfolge oder manuell gesteuert zugreift. So kann ohne Vorkenntnisse über die Art der in einem Fahrzeug eingebauten Testgeräte ein Zugriff zu diesen zwecks Diagnose stattfinden. Die zentrale Stelle kann dabei als elektronischer Speicher realisiert sein, der bevorzugt in einem der zu testenden Steuergeräte untergebracht ist.

Die DE-PS 29 18 956 beschreibt eine Prüfeinrichtung für Bauteile und Funktionen von Kraftfahrzeugen mit einem Computer. Dabei wird an einem Prüfgerät mit fest eingebautem Programm Modul bedarfsweise ein weiterer zusätzlich aufgesteckt.

Es ist Aufgabe der Erfindung, eine Einrichtung zur Identifikation von Fahrzeug- und Ausstattungsmerkmalen zu schaffen, deren Datenträger keine Pflege durch den Fahrzeughalter verlangt, die bei jedem Kundendienst zuverlässig zur Verfügung steht und die zusammen mit von einem extrenen Diagnosegerät aus beaufschlagbaren Kontaktelementen leicht überprüfbar ist.

Diese Aufgabe wird bei einer gattungsgemäßen Einrichtung mit den Merkmalen des unabhängigen Anspruchs 1 gelöst.

Die Einrichtung umfaßt im wesentlichen einen nichtflüchtigen elektronischen Schreib-Lese-Speicherschaltkreis (EEPROM), der fahrzeugfest angeordnet ist und über eine Diagnosedose von einem externen, am Fahrzeug anzuschließenden Gerät aus ausgelesen werden kann. Der Speicher wird erstmalig bei der Herstellung des Fahrzeugs im Werk beschrieben und spiegelt dann den ursprünglichen Auslieferzustand des Fahrzeugs einschließlich aller individuellen Zusatzausstattungen wider. Bei dem an das Fahrzeug anzuschließenden Gerät kann es sich um ein kundendienstübliches Diagnosegerät handeln; mit einem solchen kann das Auslesen des Speichers vor jeder Kundendienstmaßnahme erfolgen. Außerdem kann bei Einbau oder Veränderung der Sonderausstattung des Fahrzeugs der Inhalt des Speichers von einem solchen Gerät aus überschrieben, d.h. geändert bzw. aktualisiert werden. Die Erleichterung für den Kunden besteht darin, daß er weder eine Fahrzeugdatenkarte noch irgend ein anderes loses elektronisches Medium für Kundendienstaufenthalte aufbewahren, pflegen und bereithalten muß. Erfindungsgemäß ist der Speicher an bzw. in der Diagnosedose untergebracht und mit einer Mehrzahl besonderer Identifikationskontaktelemente der Diagnosedose verbunden und mit diesen einheitlich einem ersten Segment des Kontaktelementeträgers der Diagnosedose zugeordnet, das zusammen mit dem Speicher als Einheit an der zweckgemäß verbauten Dose ausgetauscht werden kann. Die übrigen, mit Steuergeräten im Fahrzeug in Verbindung stehenden Kontaktelemente sind einem zweiten Segment des Kontaktelementeträgers zugeordnet.

Der Speicher ist somit vom Fahrzeug lösbar, ohne daß an Steuergeräten Eingriffe vorgenommen werden müssen. Bei Zweifeln an der Echtheit oder Fehlerfreiheit des Speichers kann dieser außerhalb des Fahrzeugs einfach geprüft werden. Da hierbei dieselben Kontaktelemente verwendet werden wie bei der Abfrage des Speichers durch ein externes Diagnosegerät, bleiben etwaige Kontaktierungsfehler zwischen Speicher und Kontaktelementen in dem normalerweise nur mit einem Diagnosegerät kommunizierenden Segment der Diagnosedose nicht unerkannt.

Weitere Vorteile werden bei Ausbildung gemäß Lehre der Ansprüche 2 bis 4 erschlossen.

Demgemäß kann als Speicher ein EEPROM-Chip Verwendung finden, der mechanisch und elektrisch mit einem film- oder folienartigen, teilmetallisierten Substrat verbunden ist, wie dies aus der Technik elektronischer Kredit- und Datenkarten bekannt ist. Es kann insoweit - mit nur geringer Modifikation der Kontaktierung - z.B. der einen entsprechenden Karten-Speicher sowie seine Anschlußkontakte tragende Teilbereich der Filmschaltung einer elektronischen Kredit- oder Datenkarte unmittelbar Verwendung finden. Dadurch kann eine sehr kompakte Integration eines solchen Speichers in einer Diagnosedose erreicht werden. Durch Nutzung solcher in Großserie zuverlässig und kostengünstig hergestellter und bereits an einen Film oder an eine Folie gebundener und vorkontaktierter Speicher-Chips wird eine sehr hohe Zuverlässigkeit sowohl in mechanischer Hinsicht als auch hinsichtlich Datenfehlern bei geringen Kosten erreicht.

Ausführungsbeispiele sind in der Zeichnung dargestellt und in der nachfolgenden Beschreibung näher erläutert. Es zeigen:
- **Figur 1**: eine ausgebrochene räumliche Ansicht eines Verbindungseinsatzes einer Anschlußdose, in welchen ein auf einem filmartigen Substrat montierter Speicher-Chip integriert ist;
- **Figur 2**: eine ausgebrochene räumliche Ansicht eines Verbindungseinsatzes einer Anschlußdose, in den ein mit Kontaktelementen des Einsatzes verbundener herkömmlicher Speicherbaustein spritztechnisch integriert ist;
- **Figur 3**: die räumliche Ansicht des bevorzugten Ausführungsbeispiels, bei dem ein Segment des Kontaktelementeträgers mit Identifikationskontaktelementen und ein Speicher-Chip eine gemeinsam austauschbare Einheit einer Diagnosedose bilden.

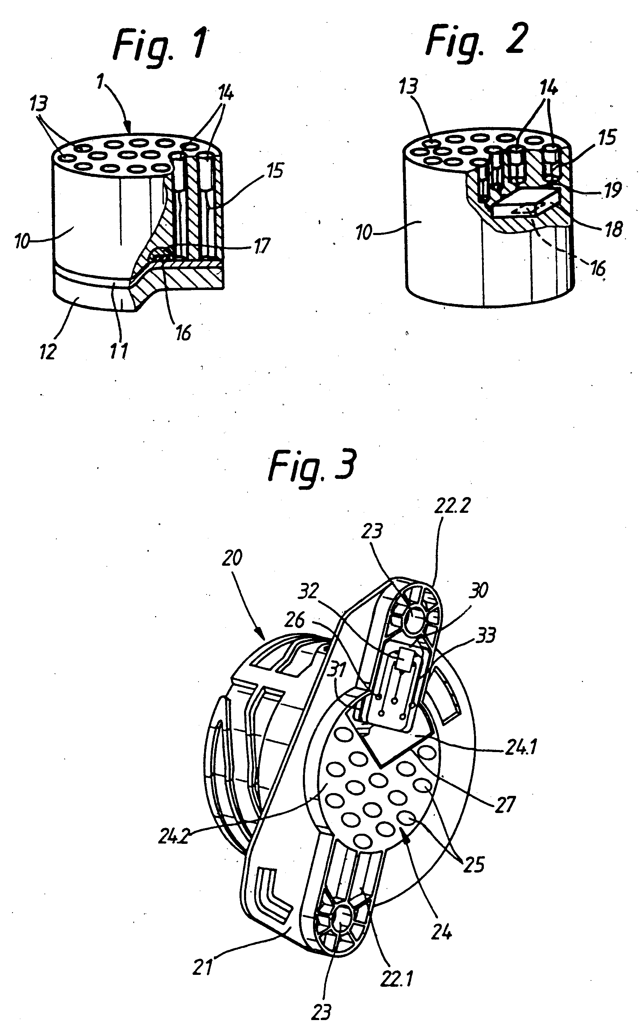

**Figur 1** veranschaulicht den zentralen Verbindungseinsatz 1 einer fahrzeugfesten, hier nicht dargestellten Diagnose-Anschlußdose. Der Verbindungseinsatz 1 umfaßt einen Kontaktelementeträger 10, in welchem stift- oder buchsenartige Diagnosekontaktelemente 13 gelagert sind. Analog dazu sind auch noch Identifikationskontaktelemente 14 darin gelagert, über welche in beschriebener Weise die Konfiguration des Fahrzeugs auslesbar ist. Die Identifikationskontaktelemente 14 sind über beliebige Verbindungsmittel 15 mit Leiterbahnen eines Film- oder Foliensubstrates 11 verbunden, welches den Kontaktelementeträger 10 rückseitig wenigstens teilweise, bevorzugt jedoch vollflächig überdeckt und unter einer Schutzabdeckung 17 aus einem Isolierstoff einen nichtflüchtigen, elektronischen, elektrisch umprogrammierbaren Speicher-(EEPROM)-Chip 16 mit integrierter Sicherheits- und Kontrollogik trägt, welcher vorzugsweise mittels Bond- oder Leitklebeverbindungstechniken an hier nicht gezeigte Leiterbahnen auf dem Substrat 11 angeschlossen ist.

Das Ausführungsbeispiel gemäß **Figur 2** verwendet einen zu einem herkömmlichen Speicherbauteil 18 verpackten elektronischen Speicher-Chip 16. Über besondere Kontaktierungen 19 sind die Anschlüsse des Speicherbauteils 18 mit Identifikationskontaktelementen 14 verbunden. Hierfür können auch besondere Verbindungsmittel 15 vorhanden sein. Im Zuge individueller Verbindungen zwischen dem Speicher-Chip 16 und Identifikationskontaktelementen 14 können - insbesondere in Verbindung mit letztgenannten Mitteln - bevorzugt jeweils wenigstens eine individuelle Schweißverbindung zweier Leiter miteinander vorgesehen sein. Die Identifikationskontaktelemente 14 sind vorzugsweise zusammen mit Diagnosekontaktelementen 13 in einem gemeinsamen oder aus zusammenpassenden Teilsegmenten zusammengefügten Kontaktelementeträger 10 gelagert. Die Festlegung des Speicherbauteils 18 im Kontaktelementeträger 10 wird beispielsweise spritz- oder vergußtechnisch bewirkt.

Das bevorzugte Ausführungsbeispiel veranschaulicht **Figur 3.**

Eine Anschlußdose 20 weist einen Befestigungsflansch 21 auf, in den beispielhaft zwei mehr oder weniger randverstärkte Befestigungsarme bzw. -stege 22.2 und 22.1 integriert sind, letztwelche beispielhaft außenliegende Bohrungen 23 zur Aufnahme von Befestigungsmitteln aufweisen. Der Befestigungsarm bzw. -steg 22.2 ist so ausgeformt, daß er z.B. innerhalb seiner vorstehenden und insoweit verstärkten Außenberandung ein dünnes, chipförmiges Modul 30 aufnehmen kann, das insoweit zumindest teilweise innerhalb der rückseitigen Umrißkontur der Anschlußdose liegen kann. Insoweit kann das Modul 30 den zentralen Kontaktelementeträger 24 im Bereich von Identifikationskontaktelementen 26 zumindest teilweise überdecken. Das Modul 30 enthält auf einem dünnen Substrat 31 wenigstens einen nichtflüchtigen Schreib-Lese-(EEPROM-)Speicherbaustein 32, der mit Leiterbahnen 33 kommuniziert, die durch wenigstens zonenweise Metallisierungen wenigstens einer der beiden Seite des Substrates 11 gebildet werden und bei einer bevorzugten Ausführungsform bis in den Bereich der Überdeckung des zentralen Kontaktelementeträgers 24 durch das Substrat 11 verlaufen. Dort sind die Leiterbahnen 33 in geeigneter Weise mit den rückseitigen Enden der Identifikationskontaktelemente 26 im Kontaktelementeträger 24 verbunden, letztwelcher wie durch die Trennungslinie 27 versinnbildlicht wenigstens zweigeteilt ist und insoweit wenigstens aus Teilsegmenten 24.1 und 24.2 mit in der Regel unterschiedlicher Kontaktzahl und/oder -beschaffenheit besteht. Der Speicher 32 bzw. das ihn beinhaltende Modul 30 ist mit dem die Identifikationskontaktelemente 26 tragenden Segment 24.1 zu einer Einheit verbunden, welche ausgetauscht werden kann, ohne daß es dazu eines Lösens der übrigen Verdrahtung oder gar des Ausbaues der Diagnosedose 20 bedarf.

Die übrigen Diagnosekontaktelemente 25 des Segments 24.2 sind für den herkömmlichen Anschluß der einzelnen Adern einer fahrzeugfesten Diagnoseleitung vorgesehen und stehen insoweit wenigstens mit den verschiedenen Steuergeräten im Fahrzeug in Verbindung.

Für die Realisierung der erläuterten Schaltungs- und Anschlußkonfiguration wird besonders vorteilhaft ein ausgebrochener Teil einer für Kredit- und Datenkarten massenproduzierten Film-Chip-Schaltung verwendet, bei der im Zuge individueller Verbindungen zwischen dem Speicher 32 und Identifikationskontaktelementen 26 bevorzugtermaßen jeweils wenigstens eine lötfreie Schweiß- oder Bondverbindung zweier Leiter miteinander vorgesehen ist. Das Modul 30 kann wenigstens teilweise mit/von Isolierstoff bedeckt/umschlossen sein.

Die gezeigte Ausbildung des Moduls 30 stellt insoweit keine Beschränkung der Erfindung dar. So kann das Substrat 31 z.B. auch aus dem körperlichen Modul 30 herausragen, so daß die Enden der dort ggfs. durchkontaktierten bzw. unterhalb des Substrates 31 verlaufenden Leiterbahnen auf die für Verbindungszwecke ggfs. besonders ausgebildeten Identifikationskontaktelemente 26 unmittelbar aufschweißbar sind. Das Modul 30 kann genausogut eine gänzlich andere Gestalt aufweisen, soweit dies für die Integration an/in einer Diagnosedose zweckmäßig bzw. erforderlich ist. Der Speicher kann jedenfalls auch einkörperlicher Bestandteil eines Ein-Chip-Mikro-Computers sein, letztwelcher die Steuerung aller Speicherfunktionen übernimmt, ähnlich wie dies von Telefonkarten her bekannt ist.

## Patentansprüche

1. Einrichtung zur Identifikation von Fahrzeug- und Ausstattungsmerkmalen, wenigstens einen elektronischen Speicher (16; 32) des EEPROM-Typs umfassend, in welchen den Fahrzeug- und Ausstattungsmerkmalen eindeutig zuordnungsfähige Digitaldaten nichtflüchtig ablegbar sind, wobei der Speicher an einer zentralen Stelle fahrzeugfest untergebracht ist,
**dadurch gekennzeichnet,**
- daß der Speicher (16; 32) an bzw. in einer Diagnosedose (20) untergebracht und mit einer Mehrzahl besonderer Identifikationskontaktelemente (14; 26) der Diagnosedose verbunden und zusammen mit diesen einheitlich einem ersten Segment (24.1) eines Kontaktelementeträgers (24) der Diagnosedose (20) zugeordnet ist, daß besagter Kontaktelementeträger (24) noch wenigstens ein zweites Segment (24.2) umfaßt, welches eine Mehrzahl von Diagnosekontaktelementen (25) trägt, die mit Steuergeräten im Fahrzeug in Verbindung stehen, und daß an der zweckgemäß verbauten Diagnosedose (20) wenigstens das erste Segment (24.1) mit Speicher (16; 32) austauschbar ist.

2. Einrichtung nach Anspruch 1,
**dadurch gekennzeichnet**,
- daß als elektronischer Speicher (16; 32) ein Halbleiter-Chip vorgesehen ist, welcher auf einem film- bzw. folienartigen Substrat (11; 31) befestigt ist und zwecks elektrischer Verbindung mit besagten Identifikationskontaktelementen (26) mit Leiterbahnen (33) kommuniziert, die durch wenigstens zonenweise Metallisierungen wenigstens einer der beiden Seite des Substrates (11) gebildet werden.

3. Einrichtung nach Anspruch 2,
**dadurch gekennzeichnet,**
- daß das Substrat (11; 31) so konfiguriert ist, daß es die von Kontaktelementen (13, 14; 25, 26) der Diagnosedose (20) ausgefüllte Fläche wenigstens teilweise überdeckt.
- daß der Halbleiter-Chip (16; 32) und das Leiterbahnen (33) tragende Substrat (11) ein ausgebrochener Teil einer für Kreditkarten massenproduzierten Film-Chip-Schaltung sind, und
- daß der Halbleiter-Chip (16; 32) und das Leiterbahnen (33) tragende Substrat (11; 31) wenigstens teilweise von einem Isolierstoff (17) bedeckt sind und ein einkörperliches Modul (30) bilden.

4. Einrichtung nach Anspruch 2,
**dadurch gekennzeichnet**,
- daß der elektronische Speicher (16; 32) Teil eines Ein-Chip-Mikro-Computers zur Steuerung der Speicherfunktionen ist.

## Claims

1. Device for the identification of vehicle and equipment features, comprising at least one electronic memory (16; 32) of the EEPROM type in which digital data which can be allocated unambiguously to the vehicle and equipment features can be stored in a non-volatile manner, the memory being accommodated at a central point, fixed to the vehicle, characterised in that the memory (16; 32) is accommodated on or in a diagnosis socket (20), is connected to a plurality of special identification contact elements (14; 26) of the diagnosis socket and, together with said elements, is allocated as a unit to a first segment (24.1) of a contact element support (24) of the diagnosis socket (20), in that said contact element support (24) also comprises at least one second element (24.2), which supports a plurality of diagnosis contact elements (25) which are connected to control apparatuses in the vehicle, and in that, on the diagnosis socket (20), which is expediently blocked, at least the first segment (24.1) having the memory (16; 32) is replaceable.

2. Device according to Claim 1, characterised in that a semiconductor chip is provided as the electronic memory (16; 32), which chip is mounted on a film-like or foil-like substrate (11; 31) and, for the purpose of electrical connection to said identification contact elements (26), communicates by means of conductor tracks (33) which are formed by metallisations, at least in zones, of at least one of the two sides of the substrate (11).

3. Device according to Claim 2, characterised in that,
- the substrate (11; 31) is configured such that it at least partially covers the area which is filled by contact elements (13, 14; 25, 26) of the diagnosis socket (20).
- the semiconductor chip (16; 32) and the substrate (11) supporting conductor tracks (33) are a broken off part of a film-chip circuit which is mass-produced for credit cards, and
- the semiconductor chip (16 32) and the substrate (11; 31) supporting the conductor tracks (33) are at least partially covered by an insulating material (17) and form an integral module (30).

4. Device according to Claim 2, characterised in that the electronic memory (16; 32) is part of a single-chip microcomputer for controlling the memory functions.

## Revendications

1. Dispositif d'identification de caractéristiques de véhicule et d'équipement, comprenant au moins une mémoire électronique (16 32) du type EEPROM dans laquelle des données numériques capables d'association univoque aux caractéristiques du véhicule et de l'équipement peuvent être enregistrées de manière inaltérable, la mémoire étant montée en position fixe dans le véhicule en un emplacement central,
caractérisé,
- en ce que la mémoire (16 ; 32) est logée sur ou dans une boîte de diagnostique (20) et est reliée à plusieurs éléments particuliers de contact d'identification (14 ; 26) de la boîte de diagnostic et est associée avec ceux-ci de manière homogène à un premier segment (24.1) d'un support (24) d'éléments de contact de la boîte de diagnostic (20), en ce que ledit support (24) d'éléments de contact comprend encore au moins un second segment (24.2) qui supporte plusieurs éléments de contact de diagnostic (25) qui sont en liaison avec des appareils de commande situés dans le véhicule et en ce qu'au moins le premier segment (24.1) est interchangeable avec des mémoires (16 ; 32) dans la boîte de diagnostic (20) encapsulée en conséquence.

2. Dispositif selon la revendication 1,
caractérisé
- en ce que la mémoire électronique (16 ; 32) qui est prévue est une puce à semi-conducteurs qui est fixée sur un substrat en film ou feuille (11 ; 31) et qui communique, pour la liaison électrique avec lesdits éléments de contact d'identification (26), avec des pistes (33) qui sont formées de métallisations au moins par zones d'au moins l'un des deux côtés du substrat (11).

3. Dispositif selon la revendication 2,
caractérisé
- en ce que le substrat (11 ; 31) est conformé de manière qu'il recouvre au moins partiellement la surface occupée par les éléments de contact (13, 14 ; 25, 26) de la boîte de diagnostic (20),
- en ce que la puce à semi-conducteurs (16 ; 32) et le substrat (11) portant les pistes (33) sont une partie enlevée d'un circuit en film à puce produit en grande série pour des cartes de crédit, et
- en ce que la puce à semi-conducteurs (16 ; 32) et le substrat (11; 31) portant les pistes (33) sont recouverts au moins partiellement d'une matière isolante (17) et forment un module monocorporel (30).

4. Dispositif selon la revendication 2,
caractérisé
- en ce que la mémoire électronique (16 ; 32) est une partie d'une micro-calculatrice à puce unique de commande des fonctions de la mémoire.
